(19) Europäisches Patentamt / European Patent Office / Office européen des brevets

(11) **EP 3 812 079 B1**

(12) **EUROPEAN PATENT SPECIFICATION**

(45) Date of publication and mention
of the grant of the patent:
**03.09.2025 Bulletin 2025/36**

(21) Application number: **20783970.5**

(22) Date of filing: **06.03.2020**

(51) International Patent Classification (IPC):
**B23K 26/322** (2014.01)    **B23K 26/323** (2014.01)
**B23K 26/32** (2014.01)    **B23K 26/348** (2014.01)
**B23K 9/173** (2006.01)    **B23K 26/12** (2014.01)
**B23K 103/16** (2006.01)

(52) Cooperative Patent Classification (CPC):
**B23K 26/123; B23K 9/173; B23K 26/322;**
**B23K 26/323;** B23K 2103/166

(86) International application number:
**PCT/CN2020/078267**

(87) International publication number:
**WO 2020/199852 (08.10.2020 Gazette 2020/41)**

(54) **METHOD FOR MANUFACTURING EQUAL-STRENGTH STEEL THIN-WALL WELDING COMPONENT WITH ALUMINUM OR ALUMINUM-ALLOY PLATING**

VERFAHREN ZUR HERSTELLUNG EINER GLEICHSTARKEN DÜNNWANDIGEN SCHWEISSKOMPONENTE MIT ALUMINIUM- ODER ALUMINIUMLEGIERUNGSPLATTIERUNG

PROCÉDÉ DE FABRICATION D'UN COMPOSANT DE SOUDAGE À PAROI MINCE EN ACIER À RÉSISTANCE ÉGALE AVEC PLACAGE D'ALUMINIUM OU ALLIAGE D'ALUMINIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2019 CN 201910248709**
**24.06.2019 CN 201910548368**

(43) Date of publication of application:
**28.04.2021 Bulletin 2021/17**

(73) Proprietor: **BAOSHAN IRON & STEEL CO., LTD.**
**Shanghai 201900 (CN)**

(72) Inventors:
• **PAN, Hua**
**Shanghai 201900 (CN)**
• **LIU, Chengjie**
**Shanghai 201900 (CN)**
• **LEI, Ming**
**Shanghai 201900 (CN)**
• **WU, Yue**
**Shanghai 201900 (CN)**
• **SUN, Zhongqu**
**Shanghai 201900 (CN)**
• **JIANG, Haomin**
**Shanghai 201900 (CN)**

(74) Representative: **Kuhnen & Wacker**
**Patent- und Rechtsanwaltsbüro PartG mbB**
**Prinz-Ludwig-Straße 40A**
**85354 Freising (DE)**

(56) References cited:
WO-A1-2010/102318    WO-A1-2019/048172
CN-A- 102 114 580    CN-A- 102 114 580
CN-A- 102 985 216    CN-A- 106 334 875
CN-A- 108 025 400    CN-A- 108 213 711
CN-A- 109 128 576    JP-A- 2018 034 188
US-A1- 2018 326 538

## Description

### Technical Field

The present disclosure relates to a method and a welding wire for manufacturing an equal-strength steel thin-wall welded component with an aluminum or aluminum alloy clad layer.

### Background Art

Lightweight and high-strength automotive steel plates have become a target pursued by the automotive industry in recent years. In addition, the energy-saving and emission-reducing policy is strongly implemented across the nation. As a result, there is an increasing demand for high-strength thinned automotive plates in the automotive industry. Compared with the cold stamping technology, the hot stamping technology has the advantages of obvious weight reduction, good formability, and high dimensional precision, and thus plays an important role in imparting high strength to automotive steel plates. As consumers' requirements for safety, reliability and comfortness of automobiles increase, many automotive enterprises seek to enhance product quality by improving design of automobile structures, modifying and utilizing novel manufacturing processes. Tailor welded blanks are obtained by welding two or more steel plates having different materials, different thicknesses or different coatings to meet different requirements of components for material properties. The laser tailor-welded blank hot stamping process can reduce vehicle body weight, improve assembly accuracy and simplify assembly process. At the same time, it can also take the advantages of hot stamping to further improve the formability of steel plates.

Hot stamped products produced by laser tailor welding are characterized by high strength, complex shape, good formability, high dimensional precision, and small rebound resilience. Steel plates for hot stamping may be classified into bare steel plates and plated steel plates according to surface state. In a practical hot stamping process, the surface of bare steel is prone to oxidation at high temperatures to form oxide scale. In the course of stamping, the oxide scale is pressed into the steel to form surface defects which greatly affect its performance in use. Compared with bare plates, hot-stamped plated steel plates avoid oxidation of the steel plates, and need no shot blasting after the hot stamping. Therefore, the hot-stamped plated steel plates have attracted more and more attention. At present, hot-stamped steel with an aluminum or aluminum alloy clad layer is commonly used. With respect to the welding of a steel plate with a clad layer such as an aluminum or aluminum alloy clad layer, one process involves removal of the clad layer. Chinese Patent Publication No. CN 101426612 A discloses a process for manufacturing a welded blank from a steel plate with an aluminum-silicon clad layer, wherein the welded blank only comprises a pre-coating of an intermetallic compound. Another process involves direct welding in the presence of a clad layer. The problem with this process is that, in the process of welding a steel plate with an aluminum or aluminum alloy clad layer, the clad layer melts into a molten pool under the influence of welding heat, forming brittle and rigid intermetallic compounds ($Fe_3Al$, $Fe_2Al_5$, $FeAl_3$). The intermetallic compounds aggregate into band or block distribution, resulting in notable decrease in the strength and ductility of the welded joint.

Moreover, the patent applications US 2018/326538 A1, WO 2010/102318 A1 and WO 2019/048172 A1 disclose laser welding methods and welding wires according to prior art.

### Summary

One object of the present disclosure is to provide a method for manufacturing an equal-strength steel thin-wall welded component with an aluminum or aluminum alloy clad layer. This method can solve a problem of an existing equal-strength steel thin-wall welded component with an aluminum or aluminum alloy clad layer, namely the performance of a welding joint becoming poor after thermal forming of the welding joint, because the method guarantees the tensile strength, elongation and corrosion resistance of the welding joint after hot stamping. After the hot stamping, the welding joint has a tensile strength greater than the tensile strength of the base material (a steel plate to be welded), and an elongation of greater than 4%, so that the application requirements of a tailor welded blank in the field of hot stamping are satisfied.

To achieve the above object, the technical solution of the present disclosure is as follows:
A method for manufacturing an equal-strength steel thin-wall welded component with an aluminum or aluminum alloy clad layer, comprising the following steps:

1) Preparation before steel plate welding
Taking a straight steel plate to be used as a steel plate to be welded, wherein the steel plate to be welded comprises a substrate and at least one clad layer on a surface thereof, wherein the clad layer comprises an intermetallic compound alloy layer in contact with the substrate and a metal alloy layer thereon, wherein the clad layer in a to-be-welded zone of the steel plate to be welded is not removed or thinned;

2) Presetting butt gap

Presetting a butt gap between two steel plates to be welded at 0.2 -0.5 mm;

3) Welding

Conducting welding by a laser filler wire welding process, a laser composite filler wire welding process or a gas shielded welding process (such as a gas metal arc welding process) to obtain a final equal-strength steel thin-wall welded component with an aluminum or aluminum alloy clad layer, wherein a welding joint (welding line) of the equal-strength welded component has a tensile strength greater than a tensile strength of the substrate after hot stamping, wherein the laser filler wire welding process uses a laser spot having a diameter of from 0.8 to 2.0 mm (e.g., from 1.2 to 2.0 mm), a defocus distance of from -10 to 10 mm (e.g., from 0 to 10 mm), a laser power controlled at from 4 to 6 kW, a welding speed controlled at from 40 to 140 mm/s (e.g., from 40mm/s to 120mm/s), a welding wire having a diameter of from 0.8 to 1.4 mm, and a wire feeding speed of from 2 to 8m/min (e.g., from 2m/min to 6m/min). wherein the welding wire used for the welding in step 3) has a composition based on weight percentage of C 0.05-0.16%, Si 0.2-0.5%, Mn 1.5-2.8%, P$\leq$0.03%, S$\leq$0.005%, 0.02%$\leq$Al<0.06%, Ni 1.5-3%, Cr 0.05-0.2%, Mo 0.1-0.7%, and a balance Fe and other unavoidable impurities.

Preferably, in step 1), prior to the welding, the steel plate to be welded is subjected to surface cleaning to ensure that the steel plate is straight, clean, and free of oil and water.

Preferably, during the welding in step 3), the shielding gas is one containing an active gas, wherein the active gas has a volume percentage of from 5% to 100%. Preferably, the active gas is carbon dioxide. Preferably, the shielding gas is carbon dioxide or a mixture of carbon dioxide and argon. Preferably, carbon dioxide in the mixture has a volume percentage of from 5 to 80%, such as 5 to 50% or 10 to 80%. Preferably, in the present disclosure, the shielding gas has a flow rate of from 5 to 30 L/min, such as from 10 to 20 L/min.

Preferably, the laser composite filler wire welding process uses a laser spot having a diameter of from 0.4 to 1.2 mm (e.g., from 0.4 to 0.8 mm), a defocus distance of from -10 to 10 mm (e.g., from 0 to 10 mm), a laser power controlled at from 1 to 5 kW (e.g., from 1 to 3 kW), a welding speed controlled at from 40 to 140 mm/s (e.g., from 40 mm/s to 120mm/s); a welding wire having a diameter of from 0.8 to 1.4 mm, a wire feeding speed of from 2 to 8 m/min (e.g., from 4 m/min to 6 m/min), a welding current of from 80 to 100 A, and a voltage of from 18 to 25 V.

Preferably, the gas shielded welding process uses a welding current of from 110 to 130 A, a welding voltage of from 18 to 25 V, a welding speed of from 300 to 800 mm/min (e.g., 400-600 mm/min), and a welding wire having a diameter of from 0.8 to 1.4 mm.

Preferably, the substrate of the steel plate to be welded has a composition based on weight percentage of C: 0.08-0.8%, Si: 0.05-1.0%, Mn: 0.1-5%, P<0.3%, S<0.1%, Al<0.3%, Ti<0.5%, B: 0.0005-0.1%, Cr: 0.01-3%, and a balance of Fe and other unavoidable impurities.

Preferably, the substrate of the steel plate to be welded has a composition based on weight percentage of C: 0.1-0.6%, Si: 0.07-0.7%, Mn: 0.3-4%, P<0.2%, S<0.08%, Al<0.2%, Ti<0.4%, B: 0.0005-0.08%, Cr: 0.01-2%, and a balance of Fe and other unavoidable impurities.

Preferably, the substrate of the steel plate to be welded has a composition based on weight percentage of C: 0.15-0.5%, Si: 0.1-0.5%, Mn: 0.5-0.3%, P<0.1%, S<0.05%, Al<0.1%, Ti<0.2%, B: 0.0005-0.08%, Cr: 0.01-1%, and a balance of Fe and other unavoidable impurities.

Preferably, the substrate of the steel plate to be welded comprises Al: 0.01-0.09%, more preferably 0.04-0.09%; Ti: 0.01-0.2%, more preferably 0.05-0.2%; B: 0.001-0.02%, more preferably 0.002- 0.008%; Cr: 0.1-1%, more preferably 0.15-0.8%.

Preferably, the substrate of the steel plate to be welded has a thickness of from 0.5 mm to 3 mm.

Preferably, the clad layer of the steel plate to be welded is pure aluminum or aluminum alloy, wherein the aluminum alloy has a composition based on weight percentage of Si: 5-11%, Fe: 0-4%, and a balance of Al and other unavoidable impurities.

The welding wire used for the welding in step 3) has a composition based on weight percentage of C 0.05-0.16%, Si 0.2-0.5%, Mn 1.5-2.8%, P<0.03%, S<0.005%, 0.02%$\leq$Al<0.06%, Ni 1.5 -3%, Cr 0.05-0.2%, Mo 0.1-0.7%, and a balance Fe and other unavoidable impurities.

In some embodiments of the present disclosure, the present disclosure provides a method for manufacturing an equal-strength steel thin-wall welded component with an aluminum or aluminum alloy clad layer, characterized in that the method comprises the following steps:

1) Preparation before steel plate welding

prior to welding, a steel plate to be welded is subjected to surface cleaning to ensure that the steel plate is straight, clean, and free of oil and water;

2) Presetting butt gap for welding

Keeping a butt gap between two steel plates to be edge welded at 0.2 mm-0.5 mm;

3) Welding process

Using a laser filler wire welding process or a gas shielded welding process, wherein a laser spot diameter is from 1.2 to 2.0 mm; a defocus distance is from 0 to 10mm; a laser power is controlled in a range of from 4 kW to 6kW; a welding speed is controlled in a range of from 40 mm/s to 120 mm/s; a welding wire diameter is from 0.8 mm to 1.4 mm; a wire feeding speed is from 2 m/min to 6 m/min; and a shielding gas is a mixture of argon and carbon dioxide.

Preferably, the shielding gas is a mixture of argon + carbon dioxide, wherein carbon dioxide has a volume percentage of from 5% to 50%.

In some embodiments of the present disclosure, the present disclosure also provides an equal-strength steel thin-wall welded component with an aluminum or aluminum alloy clad layer manufactured by the method for manufacturing an equal-strength steel thin-wall welded component with an aluminum or aluminum alloy clad layer according to any embodiment of the present disclosure.

In some embodiments of the present disclosure, the present disclosure also provides an equal-strength steel thin-wall welded component with an aluminum or aluminum alloy clad layer, characterized in that the equal-strength component comprises a steel plate comprising a substrate and at least one clad layer on a surface thereof, wherein the clad layer comprises an intermetallic compound alloy layer in contact with the substrate and a metal alloy layer thereon, wherein the substrate has a composition based weight percentage of C: 0.08-0.8%, Si: 0.05-1.0%, Mn: 0.1-5%, P<0.3%, S<0.1%, Al<0.3%, Ti<0.5%, B: 0.0005-0.1%, Cr: 0.01-3%, and a balance of Fe and unavoidable impurities. Preferably, the substrate has a composition based on weight percentage of C: 0.1-0.6%, Si: 0.07-0.7%, Mn: 0.3-4%, P<0.2%, S<0.08%, Al<0.2%, Ti<0.4%, B: 0.0005-0.08%, Cr: 0.01-2%, and a balance of Fe and unavoidable impurities. More preferably, the substrate has a composition based on weight percentage of C: 0.15-0.5%, Si: 0.1-0.5%, Mn: 0.5-3%, P<0.1%, S<0.05%, Al<0.1%, Ti<0.2%, B: 0.0005-0.08%, Cr: 0.01-1%, and a balance of Fe and unavoidable impurities. Preferably, the substrate of the steel plate to be welded comprises Al: 0.01-0.09%, more preferably 0.04-0.09%; Ti: 0.01-0.2%, more preferably 0.05-0.2%; B: 0.001-0.02%, more preferably 0.002- 0.008%; Cr: 0.1-1%, more preferably 0.15-0.8%.

Preferably, the clad layer of the equal-strength steel thin-wall welded component with an aluminum or aluminum alloy clad layer is pure aluminum or aluminum alloy, wherein the aluminum alloy has a composition based on weight percentage of Si: 5-11%, Fe: 0-4%, and a balance of Al.

Preferably, the substrate of the equal-strength steel thin-wall welded component with an aluminum or aluminum alloy clad layer has a thickness of from 0.5 mm to 3 mm.

The welding wire used between the steel plates of the equal-strength component has a composition based on weight percentage of C 0.05-0.16%, Si 0.2-0.5%, Mn 1.5-2.8%, P<0.03%, S<0.005%, 0.02%≤Al<0.06%, Ni 1.5-3%, Cr 0.05-0.2%, Mo 0.1-0.7%, and a balance Fe and other unavoidable impurities.

Preferably, the welding line of the equal-strength steel thin-wall welded component according to any embodiment of the present disclosure has a tensile strength of not less than 1300 MPa, more preferably not less than 1400 MPa, more preferably not less than 1450 MPa. Preferably, the tensile strength is not higher than 1700MPa. The welding joint has an elongation of greater than 4%. If the welding joint is fractured under a tensile load, the fracture occurs in the substrate. More preferably, the tensile strength of the welding line is higher than the tensile strength of the substrate. Preferably, the welding joint of the equal-strength steel thin-wall welded component according to any embodiment of the present disclosure has a hardness of ≥400 HV, more preferably ≥430 HV.

A welding wire is used in the welding according to the method for manufacturing an equal-strength steel thin-wall welded component with an aluminum or aluminum alloy clad layer, wherein the welding wire has a composition based on weight percentage of C 0.05-0.16%, Si 0.2-0.5%, Mn 1.5 -2.8%, P≤0.03%, S≤0.005%, 0.02%≤Al<0.06%, Ni 1.5-3%, Cr 0.05-0.2%, Mo 0.1-0.7%, and a balance of Fe and other unavoidable impurities. The welding wire has a diameter of from 0.8 to 1.4 mm.

In the compositional design of the welding wire according to the present disclosure:

Silicon is a deoxygenating element in the welding wire. It can prevent iron from combining with oxygen, and reduce iron oxide in a molten pool. However, if silicon is used alone for deoxygenation, due to the high melting point (about 1710 °C) and small particle size of the resulting silicon dioxide, it's difficult for silicon dioxide particles to float and be removed from the molten pool, which leads to easy entrapment of slag in the welding line. Therefore, the weight percentage of silicon in the welding wire according to the present disclosure is controlled within the range of 0.2-0.5%, preferably within the range of 0.2-0.45%, more preferably in the range of 0.3-0.5%.

Manganese is an important hardenability element, having a great influence on the toughness of the welding line. It is also a deoxygenating element, but its deoxygenating ability is slightly lower than that of silicon. If manganese is used alone for deoxygenation, it's difficult for the resulting manganese oxide to float and be removed from the molten pool due to its high density. Therefore, silicon and manganese are used in combination in the welding wire for deoxygenation according to the present disclosure, so that the deoxygenation product is a composite silicate salt ($MnO.SiO_2$) which has a lower melting point (about 1270°C) and a lower density and can aggregate into large molten slag in the molten pool. Hence, its floating is favored, and good deoxygenating effect can be achieved. In addition, manganese also has a function of desulfurization. It combines with sulfur to produce manganese sulfide, which can reduce the propensity of sulfur to cause thermal cracking. With various factors taken into consideration, the weight percentage of manganese in the welding wire according to the present disclosure is controlled between 1.5-2.8%, preferably 1.5-2.4%, more preferably 1.5-2.2%.

Sulfur tends to form iron sulfide in the molten pool, and iron sulfide is distributed in the grain boundary like a network. Thus, the toughness of the welding line is reduced notably. Therefore, sulfur in the welding wire is harmful, and its content must be strictly controlled. Generally, the S content is controlled at S≤0.005%.

The strengthening effect of phosphorus in steel is second only to carbon. Phosphorus increases the strength and hardness of the steel. Phosphorus can also improve the corrosion resistance of the steel, but the plasticity and toughness are reduced remarkably, especially at low temperatures. Hence, phosphorus is harmful in the welding wire, and its content must be strictly controlled. Generally, the phosphorus content is controlled at P≤0.03%, preferably ≤0.02%.

On the one hand, nickel can strongly increase the strength of steel, and on the other hand, it always keeps the toughness of iron at a very high level, thereby lowering the embrittlement temperature of the steel. The lattice constant of nickel is similar to that of austenite, leading to formation of a continuous solid solution, thereby reducing the critical Ms point, increasing the stability of austenite, and improving the hardenability of the welding zone. Therefore, the weight percentage of nickel in the welding wire according to the present disclosure is controlled at 1.5-3%, preferably 1.8-3%.

Chromium can increase the strength and hardness of steel without decreasing the plasticity and toughness obviously. Chromium can increase the hardenability of the steel and has a secondary hardening effect, which can increase the hardness and wear resistance of carbon steel without embrittling the steel. Chromium can expand the $\gamma$ phase region, improve the hardenability and thermal strength, reduce the temperature window in which the $\delta$ phase exists at high temperatures, promote the $\delta{\to}\gamma$ phase transition, and inhibit precipitation of high temperature $\delta$ ferrite. Therefore, the weight percentage of chromium in the welding wire according to the present disclosure is controlled within 0.05-0.2%, preferably 0.1-0.2%.

Molybdenum in the welding wire can increase the strength and hardness of steel, refine the grains, and improve the high temperature strength, creep strength and fatigue strength. When the molybdenum content is equal to or less than 0.7%, the plasticity can be improved, and the cracking tendency can be reduced. Molybdenum can also expand the $\gamma$ phase region, improve the hardenability and thermal strength, reduce the temperature window in which the $\delta$ phase exists at high temperatures, promote the $\delta{\to}\gamma$ phase transition, and inhibit precipitation of high temperature $\delta$ ferrite. Therefore, the weight percentage of molybdenum in the welding wire according to the present disclosure is controlled between 0.1-0.7%, preferably between 0.3-0.7%, and more preferably 0.4-0.7%.

In the welding wire according to the present disclosure, the C content is preferably 0.05-0.14%, more preferably 0.07-0.14%.

In a preferred embodiment, the welding wire used for the welding in the method for manufacturing the equal-strength steel thin-wall welded component with an aluminum or aluminum alloy clad layer according to the present disclosure has a composition based on weight percentage of C 0.05-0.14%, Si 0.3-0.5%, Mn 1.5-2.4%, P<0.02%, S<0.005%, 0.02%≤Al<0.06%, Ni 1.5-3%, Cr 0.05-0.2%, Mo 0.3-0.7%, and a balance Fe and other unavoidable impurities. More preferably, the welding wire has a composition based on weight percentage of C 0.07-0.14%, Si 0.3-0.5%, Mn 1.5-2.2%, P<0.02%, S<0.005%, 0.02%≤Al<0.06%, Ni 1.8-3%, Cr 0.1-0.2%, Mo 0.4-0.7%, and a balance of Fe and other unavoidable impurities.

When welding a plated plate having a preset welding gap, a welding wire comprising Mo, Cr, Ni and other elements according to the present disclosure is delivered to the tailor welding area to suppress the formation of high temperature $\delta$ ferrite. Molybdenum and chromium elements can expand the $\gamma$ phase region, improve the hardenability and thermal strength, reduce the temperature window in which the $\delta$ phase region exists at high temperatures, promote the $\delta{\to}\gamma$ phase transition, and inhibit precipitation of high temperature $\delta$ ferrite. The lattice constant of nickel is similar to that of austenite, leading to formation of a continuous solid solution, thereby reducing the critical Ms point, increasing the stability of austenite, and improving the hardenability of the welding zone.

In addition, the coexistence of Mo, Cr, and Ni can further improve the fatigue performance of the welding joint, realize the high martensite conversion in the welding line structure, and improve the mechanical properties of the welding joint.

The carbon equivalent formula recommended by the International Institute of Welding is as follows:

$$CE = C + Mn/6 + (Cr+Mo+V)/5 + (Ni+Cu)/15(\%)$$

According to the above formula, the filling of the welding wire will slightly increase the carbon equivalent of the welding joint, thereby ensuring the hardenability of the joint. In addition, the filling of the welding wire will further dilute the composition of the clad layer in the welding line, and chromium, molybdenum, nickel and other elements in the welding wire increase the stability of austenite and improve the hardenability of the welding line, thereby helping to prevent formation of iron-aluminum intermetallic compounds and granular ferrite phase in the welding line during hot stamping, so that the welding line of the equal-strength steel thin-wall welded component has a tensile strength greater than that of the base material.

In the method for manufacturing equal-strength steel thin-wall welding component with an aluminum or aluminum alloy clad layer:

1. The steel plate to be welded according to the present disclosure is provided with a clad layer on at least one surface of the substrate, wherein the clad layer comprises an intermetallic compound alloy layer in contact with the substrate and a metal alloy layer thereon. In particular, according to the present disclosure, the clad layer in the to-be-welded zone of the component to be welded is not removed or thinned before the welding or during the welding.

2. The shielding gas for the welding is one comprising an active gas. The active gas enhances the activity of the shielding gas in the welding zone, which is beneficial to increase the penetration rate of the plate and the fluidity of the molten metal, improve the uniformity of the molten pool metal composition, and avoid segregation of aluminum element, thereby ensuring that the performances of the joint meet the requirements of the automotive industry.

3. Before the welding, it's ensured that the surface of the steel plate to be welded is clean. The thickness of the substrate is 0.5 mm-3 mm, and a gap of 0.2 mm-0.5 mm is preset for the splicing portion. A welding device is used to tailor weld the steel plate with the clad layer. The clad layer enters the molten pool under the welding heat, and is vigorous agitated during the welding to facilitate homogenization of the composition.

In addition, by controlling the wire feeding speed at 2-8 m/min, the composition of the deposited metal (the welding line metal formed after the welding wire is melted) in the welding line is changed, so that the concentration of aluminum element in the welding line is less than 10%. At the same time, chromium, molybdenum, nickel and other elements in the welding wire increase the stability of austenite and improve the hardenability of the welding line, thereby avoiding formation of iron-aluminum intermetallic compounds and granular ferrite phase in the welding line during hot stamping, thus realizing control over the structure and size of the welding line phase.

4. The heat treatment of the equal-strength steel thin-wall welded component according to the present disclosure provides a microstructure that is a martensite structure. However, due to the presence of the aluminum-containing clad layer, the aluminum clad layer will melt and enter the welding line during the welding, which seriously affects the phase transition process of the welding line during the hot stamping, such that the granular ferrite remains to room temperature, significantly deteriorating the mechanical properties of the welding joint. Therefore, the quality of the welding joint depends on the proportion of the martensite structure in the welding line structure and the morphology of ferrite. For this reason, it is necessary to reduce precipitation of ferrite in the welding line structure, especially to avoid the formation of granular ferrite.

The formation of high temperature $\delta$ ferrite is suppressed by using a welding wire comprising Mo, Cr, Ni and other elements according to the present disclosure. Mo and Cr are elements that expand the $\gamma$ phase region and improve hardenability and thermal strength. They reduce the temperature window in which the $\delta$ phase region exists at high temperatures, promote the $\delta\rightarrow\gamma$ phase transition, and inhibit the precipitation of high-temperature $\delta$ ferrite. The lattice constant of Ni is similar to that of austenite, leading to formation of a continuous solid solution, thereby reducing the critical Ms point, increasing the stability of austenite, and improving the hardenability of the welding zone.

5. The present disclosure eliminates the need to remove or thin the clad layer of a component to be welded before welding and/or during the welding as required in the prior art. Hence, there is no need to arrange a clad layer pretreatment line, thereby saving equipment investment.

In addition, no matter what method is used to remove or thin the clad layer in the prior art, the production speed will be slowed. With the use of the clad layer pretreatment process according to the present disclosure, the production efficiency can be increased by at least 20%.

The direct welding according to the filler wire welding method of the present disclosure, without removing or thinning the clad layer of the component to be welded, guarantees the tensile strength, elongation and corrosion resistance of the welding joint after hot stamping. After the hot stamping, the tensile strength of the welding joint is greater than that of the base material, and the elongation is greater than 4%, satisfying the application requirements of the automotive industry.

## Description of the Drawings

Fig. 1 is a curve graph showing the tensile performance of a welding joint after hot stamping in Example 1 according to the present disclosure.

Fig. 2 is an image showing the cracking position of the tensile sample of a welding joint after hot stamping in Example 1 according to the present disclosure.

Fig. 3 is a metallographic diagram of a welding joint after hot stamping in Example 1 according to the present disclosure.

Fig. 4 shows the hardness distribution of a welding joint after hot stamping in Example 1 according to the present disclosure.

**Detailed Description**

The disclosure will be further illustrated with reference to the following Examples and accompanying drawings.

Example 1

A hot formed steel plate to be welded was subjected to surface cleaning to remove contaminants such as oil and water stains from the surface to guarantee cleanliness of the surface.

The 1.75mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a spot diameter of 1.8 mm, a welding power of 4.5 kW, a welding speed of 80 mm/s, a preset butt gap of 0.3 mm, a defocus distance of 8 mm, a wire feeding speed of 3 m/min, a welding wire diameter of 1.2mm, a shielding gas of 90% argon + 10% carbon dioxide gas, and a gas flow of 15 L/min were used.

After the welding, metallographic examination was conducted on the cross-section of the welding line. The macromorphology of the welding line was excellent, and there was no obvious spatter.

After the welding, the tailor welded blank was subjected to hot stamping and quenching, wherein the heating temperature was 945 °C, the heating time was 4 minutes, and the blank was pressurized in a water-passing mold for 10 seconds.

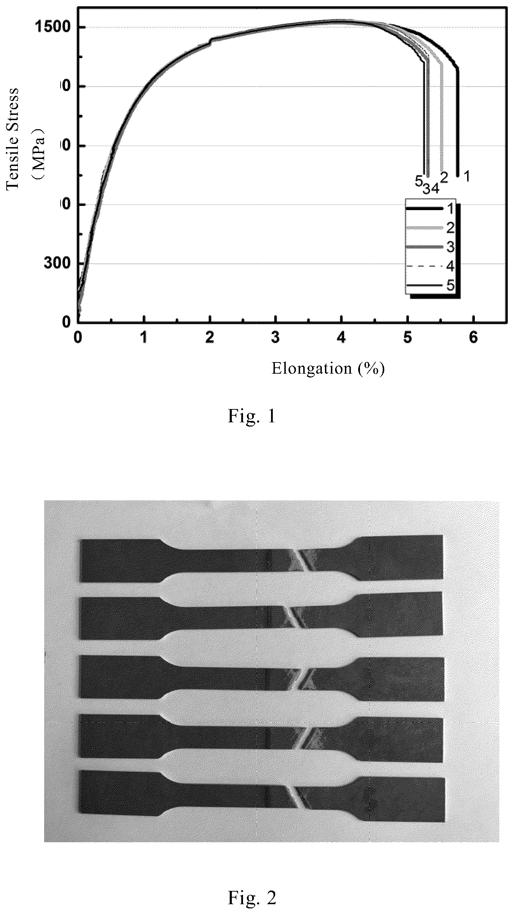

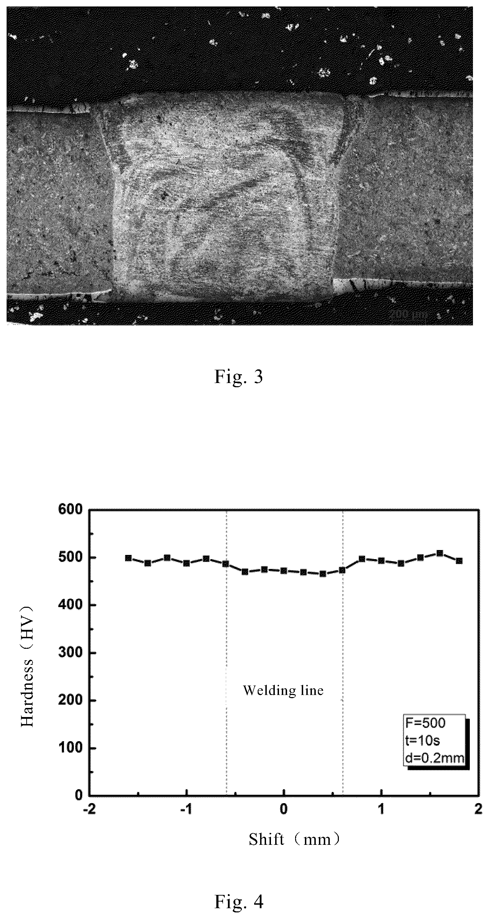

After the above-mentioned thermal cycle, the tailor welded blank was first completely austenitized. During the heating, atoms diffused between the clad layer and the steel, so that the original clad layer completely transformed into an intermetallic compound layer having a thickness larger than the thickness of the original clad layer. In addition, this layer had the characteristics of high melting point and high hardness, which prevented oxidation and decarburization of the substrate during the heating stage and the pressurizing stage. During the pressurizing stage in the mold, martensitic transformation occurred in the tailor welded blank. Then, evaluation was conducted on the performances of the welding joint according to Table 3. See Fig. 1 for the tensile curve of the welding joint, Fig. 2 for the fracture position, Fig. 3 for the metallographic image of the joint (no granular ferrite was observed in the welding line structure), and Fig. 4 for the hardness of the joint. See Table 3 for the performances of the tailor welded blank after the hot stamping.

Example 2

A hot formed steel plate to be welded was subjected to surface cleaning to remove contaminants such as oil and water stains from the surface to guarantee cleanliness of the surface.

The 1.8 mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a spot diameter of 2.0 mm, a welding power of 6 kW, a welding speed of 80 mm/s, a preset butt gap of 0.5 mm, a defocus distance of 10 mm, a wire feeding speed of 4 m/min, a welding wire diameter of 1.2 mm, a shielding gas of 80% argon + +20% carbon dioxide gas, and a gas flow of 15 L/min were used.

After the welding, metallographic examination was conducted on the cross-section of the welding line. The macromorphology of the welding line was excellent, and there was no obvious spatter.

After the welding, the same hot stamping process as that used in Example 1 was used for flat plate hot stamping. See Table 3 for the performances of the tailor welded blank after the hot stamping.

Example 3

A hot formed steel plate to be welded was subjected to surface cleaning to remove contaminants such as oil and water stains from the surface to guarantee cleanliness of the surface.

The 1.5mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a laser spot diameter of 1.8 mm, a welding power of 5 kW, a welding speed of 80 mm/s, a preset butt gap of 0.4mm, a defocus distance of 8 mm, a wire feeding speed of 3 m/min, a welding wire diameter of 1.2mm, a shielding gas of 60% argon + 40% carbon dioxide gas, and a gas flow of 15 L/min were used.

After the welding, metallographic examination was conducted on the cross-section of the welding line. The macromorphology of the welding line was excellent, and there was no obvious spatter.

After the welding, the same hot stamping process as that used in Example 1 was used for flat plate hot stamping. See Table 3 for the performances of the tailor welded blank after the hot stamping.

Example 4

A hot formed steel plate to be welded was subjected to surface cleaning to remove contaminants such as oil and water stains from the surface to guarantee cleanliness of the surface.

The 1.4mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a laser spot diameter of 1.8 mm, a welding power of 5 kW, a welding speed of 80 mm/s, a preset butt gap of 0.4 mm, a defocus distance of 8 mm, a wire feeding speed of 2.5 m/min, a welding wire diameter of 1.2 mm, a shielding gas of 60% argon + 40% carbon dioxide gas, and a gas flow of 15 L/min were used.

After the welding, metallographic examination was conducted on the cross-section of the welding line. The macromorphology of the welding line was excellent, and there was no obvious spatter.

After the welding, the same hot stamping process as that used in Example 1 was used for flat plate hot stamping. See Table 3 for the performances of the tailor welded blank after the hot stamping.

Example 5

A hot formed steel plate to be welded was subjected to surface cleaning to remove contaminants such as oil and water stains from the surface to guarantee cleanliness of the surface.

The 1.2 mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a laser spot diameter of 1.8 mm, a welding power of 4.5 kW, a welding speed of 80 mm/s, a preset butt gap of 0.3mm, a defocus distance of 8 mm, a wire feeding speed of 2 m/min, a welding wire diameter of 1.2 mm, a shielding gas of 40% argon + 60% carbon dioxide gas, and a gas flow of 15 L/min were used.

After the welding, metallographic examination was conducted on the cross-section of the welding line. The macromorphology of the welding line was excellent, and there was no obvious spatter.

After the welding, the same hot stamping process as that used in Example 1 was used for flat plate hot stamping. See Table 3 for the performances of the tailor welded blank after the hot stamping.

Example 6

A hot formed steel plate to be welded was subjected to surface cleaning to remove contaminants such as oil and water stains from the surface to guarantee cleanliness of the surface.

The 1.75 mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a laser spot diameter of 1.4 mm, a welding power of 5 kW, a welding speed of 80 mm/s, a preset butt gap of 0.4 mm, a defocus distance of 7 mm, a wire feeding speed of 5 m/min, a welding wire diameter of 1.0 mm, a shielding gas of 20% argon + 80% carbon dioxide gas, and a gas flow of 15 L/min were used.

After the welding, metallographic examination was conducted on the cross-section of the welding line. The macromorphology of the welding line was excellent, and there was no obvious spatter.

After the welding, the same hot stamping process as that used in Example 1 was used for flat plate hot stamping. See Table 3 for the performances of the tailor welded blank after the hot stamping.

Example 7

A hot formed steel plate to be welded was subjected to surface cleaning to remove contaminants such as oil and water stains from the surface to guarantee cleanliness of the surface.

The 1.8 mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a laser spot diameter of 1.4 mm, a welding power of 5 kW, a welding speed of 80 mm/s, a preset butt gap of 0.4 mm, a defocus distance of 7 mm, a wire feeding speed of 6 m/min, a welding wire diameter of 1.0 mm, a shielding gas of 100% carbon dioxide gas, and a gas flow of 15 L/min were used.

After the welding, metallographic examination was conducted on the cross-section of the welding line. The macromorphology of the welding line was excellent, and there was no obvious spatter.

After the welding, the tailor welded blank was subjected to hot stamping and quenching, wherein the heating temperature was 930°C, the heating time was 4 minutes, and the blank was pressurized in a water-passing mold for 10 seconds. See Table 3 for the performances of the tailor welded blank after the hot stamping.

Example 8

A hot formed steel plate to be welded was subjected to surface cleaning to remove contaminants such as oil and water stains from the surface to guarantee cleanliness of the surface.

The 1.5 mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a laser spot diameter of 1.4 mm, a welding power of 5 kW, a welding speed of 80 mm/s, a preset butt gap of 0.4 mm, a defocus distance of 7 mm, a wire feeding speed of 6 m/min, a welding wire diameter of 1.0 mm, a shielding gas of 60% argon + 40% carbon dioxide gas, and a gas flow of 15 L/min were used.

After the welding, metallographic examination was conducted on the cross-section of the welding line. The macromorphology of the welding line was excellent, and there was no obvious spatter.

After the welding, the same hot stamping process as that used in Example 7 was used for flat plate hot stamping. See Table 3 for the performances of the tailor welded blank after the hot stamping.

Example 9

A hot formed steel plate to be welded was subjected to surface cleaning to remove contaminants such as oil and water stains from the surface to guarantee cleanliness of the surface.

The 1.4 mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a laser spot diameter of 1.2 mm, a welding power of 4 kW, a welding speed of 80 mm/s, a preset butt gap of 0.4 mm, a defocus distance of 5 mm, a wire feeding speed of 6 m/min, a welding wire diameter of 1.0 mm, a shielding gas of 60% argon + 40% carbon dioxide gas, and a gas flow of 15 L/min were used.

After the welding, metallographic examination was conducted on the cross-section of the welding line. The macromorphology of the welding line was excellent, and there was no obvious spatter.

After the welding, the same hot stamping process as that used in Example 7 was used for flat plate hot stamping. See Table 3 for the performances of the tailor welded blank after the hot stamping.

Example 10

A hot formed steel plate to be welded was subjected to surface cleaning to remove contaminants such as oil and water stains from the surface to guarantee cleanliness of the surface.

The 1.2 mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a laser spot diameter of 1.2 mm, a welding power of 4 kW, a welding speed of 80 mm/s, a preset butt gap of 0.4 mm, a defocus distance of 5 mm, a wire feeding speed of 6 m/min, a welding wire diameter of 1.0 mm, a shielding gas of 60% argon + +40% carbon dioxide gas, and a gas flow of 15 L/min were used.

After the welding, metallographic examination was conducted on the cross-section of the welding line. The macromorphology of the welding line was excellent, and there was no obvious spatter.

After the welding, the same hot stamping process as that used in Example 7 was used for flat plate hot stamping. See Table 3 for the performances of the tailor welded blank after the hot stamping.

Example 11

A hot formed steel plate to be welded was subjected to surface cleaning to remove contaminants such as oil and water stains from the surface to guarantee cleanliness of the surface.

The 1.5 mm steel plate having an aluminum alloy clad layer (see Table 1 for the composition of the steel plate) was subjected to laser filler wire tailor welding using the following process: a welding wire as described in the present disclosure (see Table 2 for the composition of the welding wire), a light beam having a laser spot diameter of 0.6 mm, a welding power of 2 kW, a welding speed of 80 mm/s, a preset butt gap of 0.4 mm, a defocus distance of 5 mm, a wire feeding speed of 6 m/min, a welding wire diameter of 1.0 mm, a shielding gas of 60% argon + +40% carbon dioxide gas, a gas flow of 15 L/min, a welding electric current of 90 A and an electric voltage of 20 V for MAG composite tailor welding were used. After the welding, metallographic examination was conducted on the cross-section of the welding line. The macromorphology of the welding line was excellent, and there was no obvious spatter.

After the welding, the same hot stamping process as that used in Example 1 was used for flat plate hot stamping. See Table 3 for the performances of the tailor welded blank after the hot stamping.

Example 12

A hot formed steel plate to be welded was subjected to surface cleaning to remove contaminants such as oil and water stains from the surface to guarantee cleanliness of the surface.

The 1.2 mm steel plate having an aluminum alloy clad layer (see Table 1 for the composition of the steel plate) was subjected to gas metal arc tailor welding using the following process: a welding wire as described in the present disclosure (see Table 2 for the composition of the welding wire), a welding electric current of 120 A, a welding electric voltage of 22 V, a welding speed of 500 mm/s, a preset butt gap of 0.5 mm, a welding wire diameter of 1.0 mm, a shielding gas of 80% argon + 20% carbon dioxide gas, and a gas flow of 15 L/min were used. After the welding, metallographic examination was conducted on the cross-section of the welding line. The macromorphology of the welding line was excellent, and there was no obvious spatter.

After the welding, the same hot stamping process as that used in Example 1 was used for flat plate hot stamping. See Table 3 for the performances of the tailor welded blank after the hot stamping.

Table 1: Steel plate composition weight percentage (wt%)

| Ex. | C | Si | Mn | P | S | Al | Ti | B | Cr |
|---|---|---|---|---|---|---|---|---|---|
| 1 | 0.15 | 0.10 | 2.90 | 0.059 | 0.038 | 0.09 | 0.090 | 0.0031 | 0.15 |
| 2 | 0.25 | 0.23 | 1.19 | 0.015 | 0.001 | 0.04 | 0.030 | 0.0040 | 0.27 |
| 3 | 0.49 | 0.50 | 2.51 | 0.024 | 0.04 | 0.08 | 0.027 | 0.0052 | 0.51 |
| 4 | 0.39 | 0.36 | 3.00 | 0.044 | 0.03 | 0.07 | 0.05 | 0.0062 | 0.71 |
| 5 | 0.50 | 0.48 | 0.50 | 0.081 | 0.02 | 0.05 | 0.20 | 0.0071 | 0.20 |
| 6 | 0.15 | 0.10 | 2.90 | 0.059 | 0.038 | 0.09 | 0.090 | 0.0031 | 0.15 |
| 7 | 0.25 | 0.23 | 1.19 | 0.015 | 0.001 | 0.04 | 0.030 | 0.0040 | 0.27 |
| 8 | 0.49 | 0.50 | 2.51 | 0.024 | 0.04 | 0.08 | 0.027 | 0.0052 | 0.51 |
| 9 | 0.39 | 0.36 | 3.00 | 0.044 | 0.03 | 0.07 | 0.05 | 0.0062 | 0.71 |
| 10 | 0.50 | 0.48 | 0.50 | 0.081 | 0.02 | 0.05 | 0.20 | 0.0071 | 0.20 |
| 11 | 0.49 | 0.50 | 2.51 | 0.024 | 0.04 | 0.08 | 0.027 | 0.0052 | 0.51 |
| 12 | 0.50 | 0.48 | 0.50 | 0.081 | 0.02 | 0.05 | 0.20 | 0.0071 | 0.20 |

Table 2: Welding wire composition weight percentage (wt%)

| Ex. | C | Si | Mn | P | S | Al | Cr | Ni | Mo |
|---|---|---|---|---|---|---|---|---|---|
| 1 | 0.15 | 0.27 | 1.65 | 0.005 | 0.002 | 0.031 | 0.164 | 1.53 | 0.69 |
| 2 | 0.12 | 0.45 | 1.87 | 0.03 | 0.0018 | 0.056 | 0.105 | 2.5 | 0.34 |
| 3 | 0.10 | 0.39 | 2.1 | 0.024 | 0.0010 | 0.057 | 0.082 | 3.0 | 0.43 |
| 4 | 0.08 | 0.21 | 2.8 | 0.03 | 0.0012 | 0.045 | 0.189 | 2.36 | 0.21 |
| 5 | 0.06 | 0.42 | 1.78 | 0.0062 | 0.005 | 0.030 | 0.052 | 2.85 | 0.58 |
| 6 | 0.15 | 0.27 | 1.65 | 0.005 | 0.002 | 0.031 | 0.164 | 1.53 | 0.69 |
| 7 | 0.12 | 0.45 | 1.87 | 0.03 | 0.0018 | 0.056 | 0.105 | 2.5 | 0.34 |
| 8 | 0.10 | 0.39 | 2.1 | 0.024 | 0.0010 | 0.057 | 0.082 | 3.0 | 0.43 |

(continued)

| Ex. | C | Si | Mn | P | S | Al | Cr | Ni | Mo |
|---|---|---|---|---|---|---|---|---|---|
| 9 | 0.08 | 0.21 | 2.8 | 0.03 | 0.0012 | 0.045 | 0.189 | 2.36 | 0.21 |
| 10 | 0.06 | 0.42 | 1.78 | 0.0062 | 0.005 | 0.030 | 0.052 | 2.85 | 0.58 |
| 11 | 0.10 | 0.39 | 2.1 | 0.024 | 0.0010 | 0.057 | 0.082 | 3.0 | 0.43 |
| 12 | 0.06 | 0.42 | 1.78 | 0.0062 | 0.005 | 0.030 | 0.052 | 2.85 | 0.58 |

Table 3: Joint performances

| Ex. | Joint tensile strength (MPa)* | Joint elongation (%)* | Sample cracking position | Joint corrosion resistance** |
|---|---|---|---|---|
| 1 | 1505 | >4% | Base material | Passed |
| 2 | 1539 | >4% | Base material | Passed |
| 3 | 1496 | >4% | Base material | Passed |
| 4 | 1585 | >4% | Base material | Passed |
| 5 | 1565 | >4% | Base material | Passed |
| 6 | 1470 | >4% | Base material | Passed |
| 7 | 1515 | >4% | Base material | Passed |
| 8 | 1510 | >4% | Base material | Passed |
| 9 | 1540 | >4% | Base material | Passed |
| 10 | 1548 | >4% | Base material | Passed |
| 11 | 1526 | >4% | Base material | Passed |
| 12 | 1490 | >4% | Base material | Passed |

* Standard tensile samples having a nominal width of 12.5mm and an original gauge length of 50mm were used to measure the tensile strength and elongation of the joints;
** The corrosion resistance test was performed according to DIN50021, DIN50017, and DIN50014 standards.

**Claims**

1. A method for manufacturing an equal-strength steel thin-wall welded component with an aluminum or aluminum alloy clad layer, comprising the following steps:

   1) Preparation before steel plate welding
   Taking a straight steel plate to be used as a steel plate to be welded, wherein the steel plate to be welded comprises a substrate and at least one clad layer on a surface thereof, wherein the clad layer comprises an intermetallic compound alloy layer in contact with the substrate and a metal alloy layer thereon, wherein the clad layer in a to-be-welded zone of the steel plate to be welded is not removed or hinned;
   2) Presetting butt gap
   Presetting a butt gap between two steel plates to be welded at 0.2 -0.5 mm;
   3) Welding
   Conducting welding by a laser filler wire welding process, a laser composite filler wire welding process or a gas metal arc welding process to obtain a final equal-strength steel thin-wall welded component with an aluminum or aluminum alloy clad layer, wherein the laser filler wire welding process uses a laser spot having a diameter of from 0.8 to 2.0 mm, a defocus distance of from -10 to 10 mm, a laser power controlled at from 4 to 6 kW, a welding speed controlled at from 40 to 140 mm/s, a welding wire having a diameter of from 0.8 to 1.4 mm, and a wire feeding speed of from 2 to 8m/min; wherein the laser composite filler wire welding process uses a laser spot having a diameter of from 0.4 to 1.2 mm, a defocus distance of from -10 to 10 mm, a laser power controlled at from 1 to 5 kW, a welding speed controlled at from 40 to 140 mm/s, a welding wire having a diameter of from 0.8 to 1.4 mm, a wire feeding speed of from 2 to 8m/min, a welding electric current of 80-100 A, and an electric voltage of 18-25 V; and the gas metal arc welding process uses a welding electric current of 110-130 A, and a welding electric voltage of 18-25 V, a welding speed of from 300 to 800 mm/min, and a welding wire having a diameter of from 0.8 to 1.4 mm;

wherein the welding wire used for the welding in step 3) has a composition based on weight percentage of C 0.05-0.16%, Si 0.2-0.5%, Mn 1.5-2.8%, P≤0.03%, S≤0.005%, 0.02%≤Al<0.06%, Ni 1.5-3%, Cr 0.05-0.2%, Mo 0.1-0.7%, and a balance Fe and other unavoidable impurities.

2. The method for manufacturing an equal-strength steel thin-wall welded component with an aluminum or aluminum alloy clad layer according to claim 1, wherein during the welding in step 3), a shielding gas is one containing an active gas, wherein the active gas has a volume percentage of from 5% to 100%.

3. The method for manufacturing an equal-strength steel thin-wall welded component with an aluminum or aluminum alloy clad layer according to claim 1 or 2, wherein the substrate of the steel plate to be welded has a composition based on weight percentage of C: 0.08-0.8%, Si: 0.05-1.0%, Mn: 0.1-5%, P<0.3%, S<0.1%, Al<0.3%, Ti<0.5%, B: 0.0005-0.1%, Cr: 0.01-3%, and a balance of Fe and other unavoidable impurities.

4. The method for manufacturing an equal-strength steel thin-wall welded component with an aluminum or aluminum alloy clad layer according to claim 3, wherein the substrate of the steel plate to be welded comprises Al: 0.01-0.09%, more preferably 0.04-0.09%; Ti: 0.01-0.2%, more preferably 0.05-0.2%; B: 0.001-0.02%, more preferably 0.002-0.008%; Cr: 0.1-1%, more preferably 0.15-0.8%.

5. The method for manufacturing an equal-strength steel thin-wall welded component with an aluminum or aluminum alloy clad layer according to claim 1 or 2, wherein the substrate of the steel plate to be welded has a composition based on weight percentage of C: 0.1-0.6%, Si: 0.07-0.7%, Mn: 0.3-4%, P<0.2%, S<0.08%, Al<0.2%, Ti<0.4%, B: 0.0005-0.08%, Cr: 0.01-2%, and a balance of Fe and other unavoidable impurities.

6. The method for manufacturing an equal-strength steel thin-wall welded component with an aluminum or aluminum alloy clad layer according to claim 1 or 2, wherein the substrate of the steel plate to be welded has a composition based on weight percentage of C: 0.15-0.5%, Si: 0.1-0.5%, Mn: 0.5-3%, P<0.1%, S<0.05%, Al<0.1%, Ti<0.2%, B: 0.0005-0.08%, Cr: 0.01-1%, and a balance of Fe and other unavoidable impurities.

7. The method for manufacturing an equal-strength steel thin-wall welded component with an aluminum or aluminum alloy clad layer according to any one of claims 1-5, wherein the substrate of the steel plate to be welded has a thickness of from 0.5 mm to 3 mm.

8. The method for manufacturing an equal-strength steel thin-wall welded component with an aluminum or aluminum alloy clad layer according to claim 1 or 2, wherein the clad layer of the steel plate to be welded is pure aluminum or aluminum alloy, wherein the aluminum alloy has a composition based on weight percentage of Si: 5-11%, Fe: 0-4%, and a balance of Al and other unavoidable impurities.

9. The method for manufacturing an equal-strength steel thin-wall welded component with an aluminum or aluminum alloy clad layer according to claim 1 or 2, wherein the welding wire used for the welding in step 3) has a composition based on weight percentage of C 0.05-0.14%, Si 0.3-0.5%, Mn 1.5-2.4%, P<0.02%, S<0.005%, 0.02%≤Al<0.06%, Ni 1.5-3%, Cr 0.05-0.2%, Mo 0.3-0.7%, and a balance Fe and other unavoidable impurities; preferably C 0.07-0.14%, Si 0.3-0.5%, Mn 1.5-2.2%, P<0.02%, S<0.005%, 0.02%≤Al<0.06%, Ni 1.8-3%, Cr 0.1-0.2%, Mo 0.4-0.7%, and a balance Fe and other unavoidable impurities.

10. The method for manufacturing an equal-strength steel thin-wall welded component with an aluminum or aluminum alloy clad layer according to claim 1, wherein a welding line of the equal-strength steel thin-wall welded component after hot stamping has a tensile strength of not less than 1300 MPa, more preferably not less than 1400 MPa, more preferably not less than 1450 MPa; preferably, the tensile strength is not higher than 1700MPa; a welding joint has an elongation of greater than 4%; if the welding joint is fractured under a tensile load, the fracture occurs in the substrate; the tensile strength of the welding line is higher than that of the substrate.

11. A welding wire for welding, having a composition based on weight percentage of C 0.05-0.16%, Si 0.2-0.5%, Mn 1.5-2.8%, P≤0.03%, S≤0.005%, 0.02%<Al<0.06%, Ni 1.5-3%, Cr 0.05-0.2%, Mo 0.1-0.7%, and a balance Fe and other unavoidable impurities, and a welding wire diameter of 0.8-1.4 mm; preferably C 0.05-0.14%, Si 0.3-0.5%, Mn 1.5-2.4%, P<0.02%, S<0.005%, 0.02%≤Al<0.06%, Ni 1.5-3%, Cr 0.05-0.2%, Mo 0.3-0.7%, and a balance Fe and other unavoidable impurities; more preferably C 0.07-0.14%, Si 0.3-0.5%, Mn 1.5-2.2%, P<0.02%, S<0.005%,

0.02%≤Al<0.06%, Ni 1.8-3%, Cr 0.1-0.2%, Mo 0.4-0.7%, and a balance Fe and other unavoidable impurities.

**Patentansprüche**

1. Verfahren zum Herstellen einer dünnwandigen, geschweißten Komponente aus Stahl mit gleichmäßiger Festigkeit, die eine mit Aluminium oder einer Aluminiumlegierung verkleidete Schicht aufweist, mit den folgenden Schritte:

   1) Vorbereitung vor dem Schweißen der Stahlplatte
   Nehmen einer geraden Stahlplatte, die als zu schweißende Stahlplatte Verwendung finden soll, wobei die zu schweißende Stahlplatte ein Substrat und zumindest eine verkleidete Schicht auf einer Oberfläche derselben aufweist, wobei die verkleidete Schicht eine intermetallische Verbundlegierungsschicht aufweist, die das Substrat und eine Metalllegierungsschicht darauf berührt, wobei die verkleidete Schicht in einer zu schweißenden Zone der zu schweißenden Stahlplatte nicht entfernt oder verdünnt wird;
   2) Voreinstellen einer Stoßfuge
   Voreinstellen einer Stoßfuge zwischen zwei zu schweißenden Stahlplatten auf 0,2 bis 0,5 mm;
   3) Schweißen
   Durchführen des Schweißens durch einen Laserfüllerdrahtschweißvorgang, einen Laserverbundfüllerdrahtschweißvorgang oder einen Gasmetallbogenschweißvorgang, um eine dünnwandige, geschweißte Komponente aus Stahl mit endgültiger gleichmäßiger Festigkeit mit einer mit Aluminium oder einer Aluminiumlegierung verkleideten Schicht zu erhalten, wobei der Laserfüllerdrahtschweißvorgang einen Laserspot mit einem Durchmesser von 0,8 bis 2,0 mm, eine Defokussierungsentfernung von -10 bis 10 mm, eine Laserleistung, die auf 4 bis 6 kW gesteuert ist, eine Schweißgeschwindigkeit, die auf 40 bis 140 mm/s gesteuert ist, aufweist, und ein Schweißdraht einen Durchmesser von 0,8 bis 1,4 mm und eine Drahtzuführgeschwindigkeit von 2 bis 8m/min aufweist; wobei der Laserverbundfüllerdrahtschweißvorgang einen Laserspot mit einem Durchmesser von 0,4 bis 1,2 mm, eine Defokussierungsentfernung von -10 bis 10 mm, eine Laserleistung, die auf 1 bis 5 kW gesteuert ist, eine Schweißgeschwindigkeit, die auf 40 bis 140 mm/s gesteuert ist, aufweist, und ein Schweißdraht einen Durchmesser von 0,8 bis 1,4 mm und eine Drahtzuführgeschwindigkeit von 2 bis 8m/min, einen elektrischen Schweißstrom von 80 bis 100 A, und eine elektrische Spannung von 18-25 V aufweist; und wobei der Gasmetallbogenschweißvorgang einen elektrischen Schweißstrom von 110 bis 130 A und eine elektrische Schweißspannung von 18-25 V, eine Schweißgeschwindigkeit von 300 bis 800 mm/min und einen Schweißdraht mit einem Durchmesser von 0,8 bis 1,4 mm aufweist;

   wobei der für das Schweißen in Schritt 3) verwendete Schweißdraht eine Zusammensetzung auf Basis von Gewichtsanteilen von C 0,05-0,16 %, Si 0,2-0,5 %, Mn 1,5-2,8 %, P ≤ 0,03 %, S≤0,005 %, 0,02 %≤Al<0,06 %, Ni 1,5-3 %, Cr 0,05-0,2 %, Mo 0,1-0,7 % und einem Rest aus Fe und anderen unvermeidbaren Unreinheiten aufweist.

2. Verfahren zum Herstellen einer dünnwandigen, geschweißten Komponente aus Stahl mit gleichmäßiger Festigkeit, die eine mit Aluminium oder einer Aluminiumlegierung verkleidete Schicht aufweist, nach Anspruch 1, wobei während des Schweißens in Schritt 3) ein Schutzgas eines ist, das ein aktives Gas enthält, wobei das aktive Gas einen Volumenanteil von 5 % bis 100 % aufweist.

3. Verfahren zum Herstellen einer dünnwandigen, geschweißten Komponente aus Stahl mit gleichmäßiger Festigkeit, die eine mit Aluminium oder einer Aluminiumlegierung verkleidete Schicht aufweist, nach Anspruch 1 oder 2, wobei das Substrat der zu schweißenden Stahlplatte eine Zusammensetzung auf Basis von Gewichtsanteilen von C 0,08-0,8 %, Si 0,05-1,0 %, Mn 0,1-5 %, P<0,3 %, S<0,1 %, Al<0,3 %, Ti<0,5 %, B 0,0005-0,1 %, Cr 0,01-3 % und einen Rest aus Fe und anderen unvermeidbaren Unreinheiten aufweist.

4. Verfahren zum Herstellen einer dünnwandigen, geschweißten Komponente aus Stahl mit gleichmäßiger Festigkeit, die eine mit Aluminium oder einer Aluminiumlegierung verkleidete Schicht aufweist, nach Anspruch 3, wobei das Substrat der zu schweißenden Stahlplatte Al 0,01-0,09 %, vorzugsweise 0,04-0,09 %; Ti 0,01-0,2 %, vorzugsweise 0,05-0,2 %, B 0,001-0,02 %, vorzugsweise 0,002-0,008 %; Cr 0,1-1 %, vorzugsweise 0,15-0,8 % aufweist.

5. Verfahren zum Herstellen einer dünnwandigen, geschweißten Komponente aus Stahl mit gleichmäßiger Festigkeit, die eine mit Aluminium oder einer Aluminiumlegierung verkleidete Schicht aufweist, nach Anspruch 1 oder 2, wobei das Substrat der zu schweißenden Stahlplatte eine Zusammensetzung auf Basis von Gewichtsanteilen von C 0,1-0,6 %, Si 0,07-0,7 %, Mn 0,3-4 %, P<0,2 %, S<0,08 %, Al<0,2 %, Ti<0,4 %, B 0,0005-0,08 %, Cr 0,01-2 % und einen Rest aus Fe und anderen unvermeidbaren Unreinheiten aufweist.

**6.** Verfahren zum Herstellen einer dünnwandigen, geschweißten Komponente aus Stahl mit gleichmäßiger Festigkeit, die eine mit Aluminium oder einer Aluminiumlegierung verkleidete Schicht aufweist, nach Anspruch 1 oder 2, wobei das Substrat der zu schweißenden Stahlplatte eine Zusammensetzung auf Basis von Gewichtsanteilen von C 0,15-0,5 %, Si 0,1-0,5 %, Mn 0,5-3 %, P<0,1 %, S<0,05 %, Al<0,1 %, Ti<0,2 %, B 0,0005-0,08 %, Cr 0,01-1 % und einen Rest aus Fe und anderen unvermeidbaren Unreinheiten aufweist.

**7.** Verfahren zum Herstellen einer dünnwandigen, geschweißten Komponente aus Stahl mit gleichmäßiger Festigkeit, die eine mit Aluminium oder einer Aluminiumlegierung verkleidete Schicht aufweist, nach einem der Ansprüche 1 bis 5, wobei das Substrat der zu schweißenden Stahlplatte eine Dicke von 0,5 mm bis 3 mm aufweist.

**8.** Verfahren zum Herstellen einer dünnwandigen, geschweißten Komponente aus Stahl mit gleichmäßiger Festigkeit, die eine mit Aluminium oder einer Aluminiumlegierung verkleidete Schicht aufweist, nach Anspruch 1 oder 2, wobei die verkleidete Schicht der zu schweißenden Stahlplatte aus reinem Aluminium oder einer Aluminiumlegierung besteht, wobei die Aluminiumlegierung eine Zusammensetzung auf Basis von Gewichtsanteilen von Si 5-11 %, Fe 0-4 % und einem Rest aus Al und anderen unvermeidbaren Unreinheiten aufweist.

**9.** Verfahren zum Herstellen einer dünnwandigen, geschweißten Komponente aus Stahl mit gleichmäßiger Festigkeit, die eine mit Aluminium oder einer Aluminiumlegierung verkleidete Schicht aufweist, nach Anspruch 1 oder 2, wobei der für das Schweißen in Schritt 3) verwendete Schweißdraht eine Zusammensetzung auf Basis von Gewichtsanteilen von C 0,05-0,14 %, Si 0,3-0,5 %, Mn 1,5-2,4 %, P<0,02 %, S<0,005 %, 0,02 %≤Al<0,06 %, Ni 1,5-3 %, Cr 0,05-0,2 %, Mo 0,3-0,7 %, und einem Rest aus Fe und anderen unvermeidbaren Unreinheiten aufweist; vorzugsweise C 0,07-0,14 %, Si 0,3-0,5 %, Mn 1,5-2,2 %, P<0,02 %, S<0,005 %, 0,02 %≤Al<0,06 %, Ni 1,8-3 %, Cr 0,1-0,2 %, Mo 0,4-0,7 %, und einem Rest aus Fe und anderen unvermeidbaren Unreinheiten aufweist.

**10.** Verfahren zum Herstellen einer dünnwandigen, geschweißten Komponente aus Stahl mit gleichmäßiger Festigkeit, die eine mit Aluminium oder einer Aluminiumlegierung verkleidete Schicht aufweist, nach Anspruch 1, wobei eine Schweißstraße der dünnwandigen, geschweißten Komponente aus Stahl mit gleichmäßiger Festigkeit nach dem Heißprägen eine Zugfestigkeit von nicht weniger als 1300 MPa, vorzugsweise nicht weniger als 1400 MPa, vorzugsweise nicht weniger als 1450 MPa aufweist; wobei vorzugsweise die Zugfestigkeit nicht mehr als 1700 MPa beträgt; eine Schweißfuge eine Längung von mehr als 4 % aufweist; falls die Schweißfuge unter einer Zugbeanspruchung gebrochen wird, der Bruch in dem Substrat stattfindet; wobei die Zugfestigkeit der Schweißstraße höher ist als diejenige des Substrats.

**11.** Schweißdraht zum Schweißen, mit einer Zusammensetzung auf Basis von Gewichtsanteilen von C 0,05-0,16 %, Si 0,2-0,5 %, Mn 1,5-2,8 %, P≤0,03 %, S≤0,005 %, 0,02 %<Al<0,06 %, Ni 1,5-3 %, Cr 0,05-0,2 %, Mo 0,1-0,7 %, und einen Rest aus Fe und anderen unvermeidbaren Unreinheiten, und einen Schweißdurchmesser von 0,8-1,4 mm; vorzugsweise C 0,05-0,14 %, Si 0,3-0,5 %, Mn 1,5-2,4 %, P<0,02 %, S<0,005 %, 0,02 %≤Al<0,06 %, Ni 1,5-3 %, Cr 0,05-0,2 %, Mo 0,3-0,7 %, und einen Rest aus Fe und anderen unvermeidbaren Unreinheiten; idealerweise C 0,07-0,14 %, Si 0,3-0,5 %, Mn 1,5-2,2 %, P<0,02 %, S<0,005 %, 0,02 % ≤Al<0,06 %, Ni 1,8-3 %, Cr 0,1-0,2 %, Mo 0,4-0,7 % und einen Rest aus Fe und anderen unvermeidbaren Unreinheiten.

## Revendications

**1.** Procédé de fabrication d'un composant soudé à paroi mince en acier de résistance égale avec une couche de revêtement en aluminium ou en alliage d'aluminium, comprenant les étapes suivantes :

1) Préparation avant le soudage de la plaque d'acier
Prendre une plaque d'acier droite destinée à être soudée, dans laquelle la plaque d'acier à souder comprend un substrat et au moins une couche de revêtement sur une surface de celui-ci, dans laquelle la couche de revêtement comprend une couche d'alliage intermétallique en contact avec le substrat et une couche d'alliage métallique sur celle-ci, dans laquelle la couche de revêtement dans une zone à souder de la plaque d'acier à souder n'est pas retirée ou chanfreinée ;
2) Préréglage de l'écart entre les bouts
Préréglage d'un écart entre les bouts de deux plaques d'acier à souder à 0,2 -0,5 mm ;
3) Soudage
Réalisation du soudage par un procédé de soudage au fil d'apport laser, un procédé de soudage au fil d'apport composite laser ou un procédé de soudage à l'arc sous gaz avec métal, afin d'obtenir un composant soudé final en acier à paroi mince de résistance égale, avec une couche de revêtement en aluminium ou en alliage d'aluminium, dans lequel le procédé de soudage au fil d'apport laser utilise un spot laser ayant un diamètre de 0,8 à 2,0 mm, une distance de défocalisation de -10 à 10 mm, une puissance laser contrôlée entre 4 et 6 kW, une vitesse de soudage contrôlée entre 40 et 140 mm/s, un fil de soudage ayant un diamètre compris entre 0,8 et 1,4 mm et une vitesse d'alimentation du fil comprise entre 2 et 8 m/min ; dans lequel le procédé de soudage par fil d'apport composite au laser utilise un spot laser ayant un diamètre compris entre 0,4 et 1,2 mm, une distance de défocalisation comprise entre -10 et 10 mm, une puissance laser contrôlée entre 1 et 5 kW, une vitesse de soudage contrôlée entre 40 et 140 mm/s, un fil de soudage d'un diamètre compris entre 0,8 et 1,4 mm, une vitesse d'alimentation du fil comprise entre 2 et 8 m/min, un courant électrique de soudage de 80 à 100 A, et une tension électrique de 18 à 25 V ; et le procédé de soudage à l'arc sous gaz avec métal d'apport utilise un courant électrique de soudage de 110 à 130 A, une tension électrique de soudage de 18 à 25 V, une vitesse de soudage comprise entre 300 et 800 mm/min et un fil de soudage ayant un diamètre compris entre 0,8 et 1,4 mm ;

dans lequel le fil de soudage utilisé pour le soudage à l'étape 3) a une composition basée sur le pourcentage en poids de C 0,05-0,16 %, Si 0,2-0,5 %, Mn 1,5-2,8 %, P ≤ 0,03 %, S ≤ 0,005 %, 0,02 % ≤ Al < 0,06 %, Ni 1,5-3 %, Cr 0,05-0,2 %, Mo 0,1-0,7 %, et le reste étant du Fe et d'autres impuretés inévitables.

2. Le procédé de fabrication d'un composant soudé à paroi mince en acier de résistance égale avec une couche de revêtement en aluminium ou en alliage d'aluminium selon la revendication 1, dans lequel, pendant le soudage à l'étape 3), un gaz de protection est un gaz contenant un gaz actif, le gaz actif ayant un pourcentage volumique de 5 % à 100 %.

3. Le procédé de fabrication d'un composant soudé à paroi mince en acier de résistance égale avec une couche de revêtement en aluminium ou en alliage d'aluminium selon la revendication 1 ou 2, dans lequel le substrat de la plaque d'acier à souder a une composition basée sur le pourcentage en poids de C : 0,08-0,8 %, Si : 0,05-1,0 %, Mn : 0,1-5 %, P < 0,3 %, S < 0,1 %, Al < 0,3 %, Ti < 0,5 %, B : 0,0005-0,1 %, Cr : 0,01-3 %, et le reste étant du fer et d'autres impuretés inévitables.

4. Le procédé de fabrication d'un composant soudé à paroi mince en acier de résistance égale avec une couche de revêtement en aluminium ou en alliage d'aluminium selon la revendication 3, dans lequel le substrat de la plaque d'acier à souder comprend Al : 0,01-0,09 %, de préférence 0,04-0,09 % ; Ti : 0,01 à 0,2 %, de préférence 0,05 à 0,2 % ; B : 0,001 à 0,02 %, de préférence 0,002 à 0,008 % ; Cr : 0,1 à 1 %, de préférence 0,15 à 0,8 %.

5. Le procédé de fabrication d'un composant soudé à paroi mince en acier de résistance égale avec une couche de revêtement en aluminium ou en alliage d'aluminium selon la revendication 1 ou 2, dans lequel le substrat de la plaque d'acier à souder a une composition basée sur le pourcentage en poids de C : 0,1-0,6 %, Si : 0,07-0,7 %, Mn : 0,3-4 %, P < 0,2 %, S < 0,08 %, Al < 0,2 %, Ti < 0,4 %, B : 0,0005-0,08 %, Cr : 0,01-2 %, et le reste étant constitué de Fe et d'autres impuretés inévitables.

6. Le procédé de fabrication d'un composant soudé à paroi mince en acier de résistance égale avec une couche de revêtement en aluminium ou en alliage d'aluminium selon la revendication 1 ou 2, dans lequel le substrat de la plaque d'acier à souder a une composition basée sur le pourcentage en poids de C : 0,15-0,5 %, Si : 0,1-0,5 %, Mn : 0,5-3 %, P < 0,1 %, S < 0,05 %, Al < 0,1 %, Ti < 0,2 %, B : 0,0005-0,08 %, Cr : 0,01-1 %, et le reste étant constitué de Fe et d'autres impuretés inévitables.

7. Le procédé de fabrication d'un composant soudé à paroi mince en acier de résistance égale avec une couche de revêtement en aluminium ou en alliage d'aluminium selon l'une des revendications 1 à 5, dans lequel le substrat de la plaque d'acier à souder a une épaisseur de 0,5 mm à 3 mm.

8. Le procédé de fabrication d'un composant soudé à paroi mince en acier de résistance égale avec une couche de revêtement en aluminium ou en alliage d'aluminium selon la revendication 1 ou 2, dans lequel la couche de revêtement de la plaque d'acier à souder est en aluminium pur ou en alliage d'aluminium, dans lequel l'alliage d'aluminium a une composition basée sur le pourcentage en poids de Si : 5-11 %, Fe : 0-4 %, et le reste étant constitué d'Al et d'autres impuretés inévitables.

9. Le procédé de fabrication d'un composant soudé à paroi mince en acier de résistance égale avec une couche de revêtement en aluminium ou en alliage d'aluminium selon la revendication 1 ou 2, dans lequel le fil de soudage utilisé pour le soudage à l'étape 3) a une composition basée sur le pourcentage en poids de C 0,05-0,14 %, Si 0,3-0,5 %, Mn 1,5-2,4 %, P < 0,02 %, S < 0,005 %, 0,02 % ≤ Al < 0,06 %, Ni 1,5-3 %, Cr 0,05-0,2 %, Mo 0,3-0,7 %, et le reste étant du fer et d'autres impuretés inévitables ; de préférence C 0,07-0,14 %, Si 0,3-0,5 %, Mn 1,5-2,2 %, P < 0,02 %, S < 0,005 %, 0,02 % ≤ Al < 0,06 %, Ni 1,8-3 %, Cr 0,1-0,2 %, Mo 0,4-0,7 %, et le reste étant du fer et d'autres impuretés inévitables.

10. Le procédé de fabrication d'un composant soudé à paroi mince en acier de résistance égale avec une couche de revêtement en aluminium ou en alliage d'aluminium selon la revendication 1, dans lequel une ligne de soudure du composant soudé à paroi mince en acier à résistance égale a une résistance à la traction d'au moins 1300 MPa, de préférence d'au moins 1400 MPa, plus préférablement d'au moins 1450 MPa ; de préférence, la résistance à la traction n'est pas supérieure à 1700 MPa ; un joint soudé présente un allongement supérieur à 4 % ; si le joint soudé se fracture sous une charge de traction, la fracture se produit dans le substrat ; la résistance à la traction de la ligne de soudure est supérieure à celle du substrat.

11. Fil de soudage pour soudage, ayant une composition basée sur le pourcentage en poids de C 0,05-0,16 %, Si 0,2-0,5 %, Mn 1,5-2,8 %, P ≤ 0,03 %, S ≤ 0,005 %, 0,02 % < Al < 0,06 %, Ni 1,5-3 %, Cr 0,05-0,2 %, Mo 0,1-0,7 %, et le reste étant du Fe et d'autres impuretés inévitables, et un diamètre de fil de soudage de 0,8-1,4 mm ; de préférence C 0,05-0,14 %, Si 0,3-0,5 %, Mn 1,5-2,4 %, P < 0,02 %, S < 0,005 %, 0,02 % ≤ Al < 0,06 %, Ni 1,5-3 %, Cr 0,05-0,2 %, Mo 0,3-0,7 %, et le reste étant du fer et d'autres impuretés inévitables ; de préférence C 0,07-0,14 %, Si 0,3-0,5 %, Mn 1,5-2,2 %, P < 0,02 %, S < 0,005 %, 0,02 % ≤ Al < 0,06 %, Ni 1,8-3 %, Cr 0,1-0,2 %, Mo 0,4-0,7 %, et le reste étant du fer et d'autres impuretés inévitables.

Fig. 1

Fig. 2

Fig. 3

Fig. 4

**REFERENCES CITED IN THE DESCRIPTION**

**Patent documents cited in the description**

- CN 101426612 A
- US 2018326538 A1
- WO 2010102318 A1
- WO 2019048172 A1